# EUROPEAN PATENT APPLICATION

(11) **EP 1 148 258 A1**
(43) Date of publication of application: **24.10.2001**
(21) Application number: 01850068.6
(22) Date of filing: 17.04.2001
(51) Int. Cl.: F16C 3/03, F16B 7/10

(54) **Method of manufacturing a telescopic tube**

(30) Priority: 19.04.2000 SE 0001448
(71) Applicant: Svenska Kenab Karlshamns Ergonomi AB, 370 10 Bräkne-Hoby (SE)
(72) Inventor: Nilsson, Kenth, 374 37 Karlshamn (SE)
(74) Representative: Berglund, Gustav Arthur

(57) **Abstract**

The invention relates to a method of manufacturing a telescopic tube (1), which comprises an outer tube (2) and an inner tube (3) as well as guiding rings (6a, 6b) of a thickness which exceeds the difference between the inner radius of the outer tube (2) and the outer radius of the inner tube (3), for diametrical and axial guiding of the outer tube (2) and the inner tube (3) relative to each other. A first circumferential groove (7) is milled in the inner circumferential surface (4) of the outer tube (2) to a diameter corresponding to the sum of twice the thickness of the first guiding ring 6a and the outer diameter of the inner tube (3). A second circumferential groove (8) is milled in the outer circumferential surface (5) of the inner tube (3) to a diameter corresponding to the inner diameter of the outer tube (2) from which twice the thickness of the second guiding ring (6b) is subtracted. The circumferential grooves (7, 8) are provided with their respective guiding rings (6a, 6b), and the tubes (2, 3) are inserted into one another in a manner intended for telescopic tubes, such that the circumferential surfaces, separated from the respective tubes (2, 3), of the guiding rings come into abutment against the circumferential surfaces (4, 5) of the respective adjoining tubes.

## Description

### Field of the Invention

The present invention relates to a method of manufacturing a telescopic tube with diametrical and axial guiding of an inner tube relative to an outer tube in the telescopic tube.

### Background Art

Telescopic tubes are used in many different fields and constitute a smooth solution in order to be able to vary, for example, the height of a leg or the length of a shaft. A telescopic tube can also be used as a movable shell to cover an inner mechanism. For increasing the stability and stiffness of such tubular constructions, the diametrical play between the inner diameter of the outer tube and the outer diameter of inner tube must be carefully selected. One way of doing this is to be precise when selecting the tubes so that the diametrical play is minimal. This is an expensive method since high precision tubes must be selected, which are in a price range different from that of ordinary standard tubes.

Another known technique is to provide the inner tube with an external bushing whose outer diameter is adjusted to the inner diameter of the outer tube. In order to lock this bushing in place, the bushing must have a collar resting on the edge of the inner tube. Moreover the outer tube will only have a limited supporting surface on the inner tube. Owing to the length of the bushing, this may cause some degree of instability and, thus, reduced stiffness of the telescopic tube. To achieve good results in this method, it is also here necessary to be precise when selecting tube diameters and choose high precision tubes before standard tubes.

US-A-5,934,175 concerns sealing of pneumatic or alternatively hydraulic telescopic cylinders. The seal is established by forming a number of grooves on the inside and the outside of each tube part included in the cylinder, after which the grooves are fitted with, among other things, sealing rings and O-rings. A cylinder that operates well requires very narrow tolerances for, inter alia, straightness, roundness and surface defects in order to prevent wear, leakage and penetration of dirt. Therefore the tube parts are subjected to extensive working and, thus, it is not a matter of directly using high precision tubes or standard tubes. Furthermore this patent specification explicitly concerns merely cylinders, not tubes.

FR 2,048,602 A5 discloses manufacturing of telescopic means, in particular those intended to be used in corrosive environments. The relative motion of the tube parts is ensured by sliding contact between a stainless steel surface with a low degree of roughness and a surface made of a plastic material which in suspension contains a solid lubricant. The surface accuracy of the sliding surfaces of the tube parts is very high. Moreover the system has very high guiding accuracy. The telescopic means is intended for extreme environments and tolerances, which are criteria making the construction extremely expensive and thus it is of no interest to use in ordinary environments and to ordinary needs.

The difference between high precision tubes and standard quality tubes is the variation in diameter from tube to tube. For high precision tubes the variation is very small whereas standard tubes are allowed to vary within a wider range. However, the difference in inner diameter and outer diameter, respectively, along one and the same tube is in most cases negligible. The cost of high precision tubes is therefore normally considerably higher than for standard tubes, which makes it interesting to use standard tubes as much as possible.

### Summary of the Invention

The object of the present invention is, while using tubes and guiding rings/bushings of standard quality, nevertheless to provide a telescopic tube which allows stable and accurate diametrical and axial guiding.

This object is achieved by a manufacturing method being given the features that are stated in claim 1. A preferred embodiment of the manufacturing method is defined in dependent claim 2.

The inner circumferential surface of the outer tube and the outer circumferential surface of the inner tube are each provided with a circumferential groove, the depths of which are adjusted to guiding rings which have been selected in advance. The thickness of a first guiding ring thus determines, together with the outer diameter of the inner tube, the depth of a first circumferential groove in the inner circumferential surface of the outer tube. Correspondingly, the thickness of a second guiding ring determines, together with the inner diameter of the outer tube, the depth of a second circumferential groove in the outer circumferential surface of the inner tube.

Thus, the first groove is to be milled to a diameter corresponding to the sum of twice the thickness of the selected, first guiding ring and the outer diameter of the selected, inner tube. Moreover, the second groove is to be milled to a diameter corresponding to the inner diameter of the outer tube, from which twice the thickness of the selected, second guiding ring is subtracted. The depth of the grooves should further be less than, or at most correspond to, the thickness of the guiding rings, but at the same time the grooves must be so deep that the guiding rings can rest firmly in them without sliding up over the edges. When the inner tube is inserted into the outer tube in a manner intended for the field of application, the grooves must be located at such a distance from each other that the common centre axis of the tubes remains common also when one of the tubes is subjected to light force perpendicular to the centre axis.

The essential feature of the invention is that the thickness of that part of the guiding ring which projects from the groove corresponds to the radial difference between the inner diameter of the outer tube and the outer diameter of the inner tube. The width of the groove should correspond to the height of the guiding ring.

Being positioned in the grooves, the guiding rings have an outer circumferential surface which is parallel with the centre axis of the tubes, and the guiding rings are made of a low friction material, which yields good and smooth guiding when moving the tubes relative to each other. By the depth of the grooves being adjusted individually based on guiding rings selected in advance and the nominal dimensions of each tube part, standard quality tubes can be used with maintained high quality of the end product, i.e. the telescopic tube.

### Brief Description of the Drawings

The invention will now be described in more detail with reference to the accompanying drawings, in which
Fig. 1 is a cross-sectional view of a telescopic tube according to the present invention,
Fig. 2 shows a preferred embodiment of a guiding ring, and
Figs 3a-b show alternative embodiments of a guiding ring.

### Description of a Preferred Embodiment

With the aid of the drawings, an embodiment of the invention will now be described in more detail.

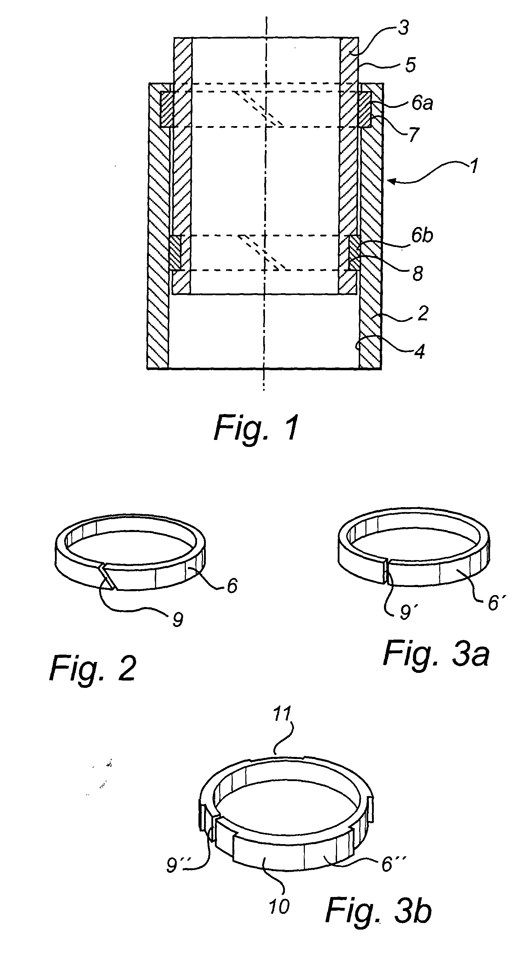

Fig. 1 is a cross-sectional view of a telescopic tube 1 according to the present invention. The telescopic tube 1 is of a conventional type and comprises a first outer tube 2 sliding on the outside of a second inner tube 3. The outer tube 2 has an inner diameter slightly exceeding the outer diameter of the inner tube 3. A first guiding ring 6a and a second guiding ring 6b are selected for the tubes. The first guiding ring 6a has an inner diameter which essentially corresponds to the outer diameter of the inner tube 3. The second guiding ring 6b has an outer diameter which essentially corresponds to the inner diameter of the outer tube 2.

A circumferential groove 7 is milled in the inner circumferential surface 4 of the outer tube 2. The inner tube 3 is in the same way formed with a groove 8 in its outer circumferential surface 5. The groove 7 in the outer tube 2 should have a diameter corresponding to the sum of the outer diameter of the inner tube 3 and twice the thickness of the guiding ring 6a. Furthermore the groove 8 in the inner tube 3 should have a diameter corresponding to the inner diameter of the outer tube 2 from which twice the thickness of the second guiding ring 6b is subtracted.

The grooves 7, 8 have the same profile as the guiding rings 6a, 6b which are intended to be used.

The depth of the grooves 7, 8 is most important for the function of the invention and should be adjusted as follows. The depth should be less than or at most correspond to the selected thickness of the guiding ring 6a, 6b. Furthermore the thickness of that part of each guiding ring which projects from the groove 7, 8, should correspond to the radial difference between the inner diameter of the outer tube 2 and the outer diameter of the inner tube 3.

Moreover the depth should be such that the guiding rings 6a, 6b are stably arranged in the respective grooves 7, 8 without any risk of sliding up over the edge of the groove when they are subjected to axial shearing force.

The width of the grooves 7, 8 should correspond to the height of each selected guiding ring 6a, 6b.

The grooves 7, 8 in the inner tube 3 and the outer tube 2 should be positioned on their respective tubes in such manner that, when the inner tube 3 is inserted into the outer tube 2 in the intended fashion, they are located at an axial distance from each other. The distance should be so great that the centre lines of the tubes 2, 3 remain essentially common even when a force is applied perpendicular to the centre line at the outer end of the outer tube 2, whether the tube 2 is partly extracted from the tube 3 or not. The guiding rings 6a, 6b in the grooves 7, 8, respectively, act as power distributing means and spacers between the tubular walls and counteract radial displacement of the centre lines of the tubes 2, 3 in connection with such a load. However, if the force is directed axially, the guiding rings act as slide paths instead.

The guiding rings can be designed in different ways, as exemplified in Fig. 2 and Figs 3a-b. The simplest variant, shown in Fig. 2, of a guiding ring 6 is a tubular unit having a through slot 9 extending along one long side and adapted to facilitate mounting of the guiding ring 6 in the groove 7 or 8. The slot 9 should be inclined relative to the centre axis of the guiding ring, but it may also have other extents in the circumferential direction.

Fig. 3a illustrates an alternative guiding ring 6' with a slot 9' which is parallel with the centre axis of the guiding ring 6'.

A guiding ring 6'' according to one more possible embodiment is shown in Fig. 3b. The circumferential surface of the guiding ring 6'' is divided into a number of guiding lugs 10 with intermediate bases 11. The diameter over the guiding lugs 10 is the same as in the simple tubular guiding ring 6 in Fig. 2. The number of guiding lugs 10 should be more than three and should be uniformly distributed along the circumference of the guiding ring 6''. Moreover the guiding ring 6'' is formed with a slot 9" which is suitably arranged in one of the bases 11 and can extend either obliquely towards or parallel with the centre axis of the guiding ring 6''.

The material of the guiding ring 6; 6'; 6'' can be some kind of plastic material which has low friction, is resistant to wear and withstands any additions of lubricant.

It will be appreciated that the tubes 2, 3 can be of other cross-section than circular. In, for example, square tubes, it is even possible to use loose guiding lugs, the thickness of which is used in the same way as a circular guiding ring 6 and which are then joined to the groove by, for example, gluing. Moreover the number of grooves in each tube may be increased.

## Claims

1. A method of manufacturing a telescopic tube (1), which comprises an outer tube (2) and an inner tube (3) as well as guiding rings (6a, 6b) of a thickness exceeding the difference between the inner radius of the outer tube (2) and the outer radius of the inner tube (3), for diametrical and axial guiding of the outer tube (2) and the inner tube (3) relative to each other, **characterised in that**
a first circumferential groove (7) is milled in the inner circumferential surface (4) of the outer tube (2) to a diameter corresponding to the sum of twice the thickness of the first guiding ring (6a) and the outer diameter of the inner tube (3),
a second circumferential groove (8) is milled in the outer circumferential surface (5) of the inner tube (3) to a diameter corresponding to the inner diameter of the outer tube (2) from which twice the thickness of the second guiding ring (6b) is subtracted,
the circumferential grooves (7, 8) are provided with their respective guiding rings (6a, 6b), and
the tubes (2, 3) are inserted into one another in a manner intended for telescopic tubes such that the circumferential surfaces, separated from the respective tubes (2, 3), of the guiding rings (6a, 6b) come into abutment against the circumferential surfaces (4, 5) of the respective adjoining tubes.

2. A method as claimed in claim 1, wherein the circumferential grooves (7, 8) are given such a depth that each guiding ring (6a; 6b) is in the axial direction fully accommodated in its circumferential groove (7, 8).
